(19) **Europäisches Patentamt / European Patent Office / Office européen des brevets**

(11) **EP 2 835 914 A1**

(12) **EUROPEAN PATENT APPLICATION**
published in accordance with Art. 153(4) EPC

(43) Date of publication:
**11.02.2015 Bulletin 2015/07**

(21) Application number: **13822640.2**

(22) Date of filing: **25.04.2013**

(51) Int Cl.:
**H04B 7/06** $^{(2006.01)}$

(86) International application number:
**PCT/CN2013/074693**

(87) International publication number:
**WO 2014/015690 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.07.2012 CN 201210263949**

(71) Applicant: **Huawei Technologies Co., Ltd.**
**Shenzhen, Guangdong 518129 (CN)**

(72) Inventors:
- **HUA, Meng**
  **Shenzhen**
  **Guangdong 518129 (CN)**
- **WU, Gengshi**
  **Shenzhen**
  **Guangdong 518129 (CN)**

- **MA, Xueli**
  **Shenzhen**
  **Guangdong 518129 (CN)**
- **WANG, Zongjie**
  **Shenzhen**
  **Guangdong 518129 (CN)**
- **FAN, Shuju**
  **Shenzhen**
  **Guangdong 518129 (CN)**
- **JIAO, Shurong**
  **Shenzhen**
  **Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **USER EQUIPMENT AND UPLINK CONTROL INFORMATION FEEDBACK METHOD IN DOWNLINK MIMO MODE**

(57) Embodiments of the present invention disclose a method for feeding back uplink control information in a downlink MIMO mode and a user equipment, which are used to implement that a UE feeds back control information to a base station, are applicable to a precoding weight set restriction application scenario, and reduce transmit power of the UE while ensuring HS-DPCCH receive performance of the base station. The method provided by the embodiments of the present invention includes: generating, by a UE, 1-bit precoding control indicator PCI information, where the PCI information is used to indicate a precoding matrix selected by the UE from two available precoding matrices in a precoding codebook; generating, by the UE, channel quality indicator CQI information, where the CQI information is 8-bit type A CQI information or 5-bit type B CQI information; performing, by the UE, joint encoding on the PCI information and the CQI information, to obtain a joint encoding result; and feeding back, by the UE, the joint encoding result to a base station through an uplink high speed dedicated physical control channel HS-DPCCH.

```
A user equipment generates 1-bit precoding control    ──201
indicator PCI information

The UE generates channel quality indicator CQI        ──202
information

The UE performs joint encoding on the PCI information  ──203
and the CQI information, to obtain a joint encoding result

The UE feeds back the joint encoding result to a base  ──204
station through an HS-DPCCH
```

FIG. 2

**Description**

**CROSS-REFERENCE TO RELATED APPLICATION**

This application claims priority to Chinese Patent Application No. 201210263949.1, filed with the Chinese Patent Office on July 27, 2012 and entitled "METHOD FOR FEEDING BACK UPLINK CONTROL INFORMATION IN DOWNLINK MIMO MODE AND USER EQUIPMENT", which is incorporated herein by reference in its entirety.

**TECHNICAL FIELD**

The present invention relates to the field of communications technologies, and in particular, to a method for feeding back uplink control information in a downlink multiple input multiple output (MIMO, Multiple Input Multiple Output) mode and a user equipment.

**BACKGROUND**

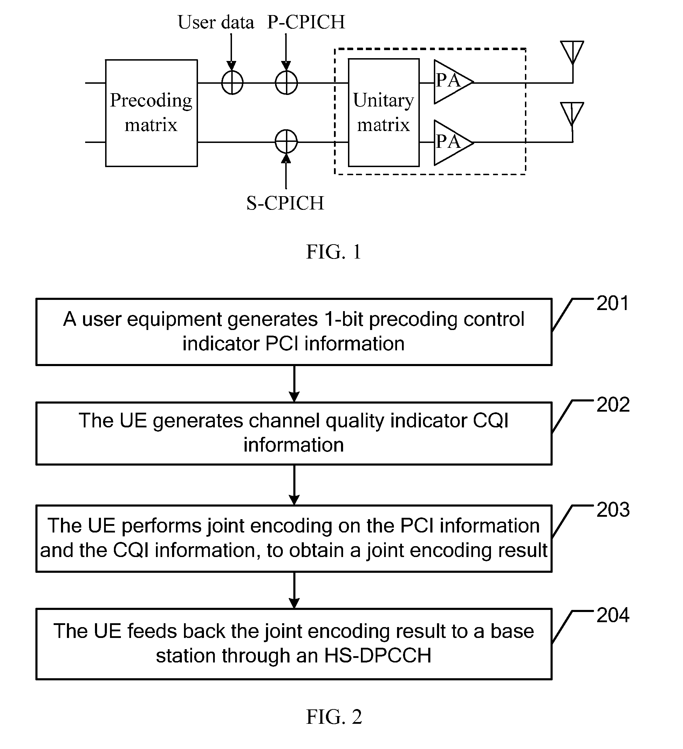

In MIMO mode, two power amplifiers (PA, Power Amplifier) of a base station are generally of a same specification. If it is expected that two PAs on a base station side both have appropriate work efficiency, it needs to be ensured that power of input signals that are input into the two PAs is balanced. However, in the MIMO mode and in a case in which multiple user equipments (UE, User Equipment) coexist in high speed downlink packet access (HSDPA, High Speed Downlink Packet Access), as shown in FIG. 1, relative to a secondary antenna that carries a secondary common pilot channel (S-CPICH, Secondary Common Pilot Channel), a primary antenna that carries a primary common pilot channel (P-CPICH, Primary Common Pilot Channel) needs to carry extra user information of the HSDPA. Therefore, power imbalance between the two input signals that are input into the PAs occurs, which affects use efficiency of the PAs.

As shown in FIG. 1, two signals that are processed by using a precoding matrix are respectively sent to the two PAs, and to ensure that power of the two input signals that are input into the PAs is balanced, before being input into the PAs, the two input signals are multiplied by the same unitary matrix, so that the power of the input signals of the two PAs is balanced. In a case of MIMO dual streams, it can be ensured that the power of the two input signals that are input into the PAs is equal. However, in a case of a MIMO single stream, before being multiplied by the unitary matrix, the two input signals are correlated, and therefore it cannot be ensured that the power of the two input signals is definitely equal after the two input signals are multiplied by the unitary matrix. The MIMO dual streams refer to that the base station schedules two different data blocks each time, where one data block is a primary data block and the other is a secondary data block; and the MIMO single stream refers to that the base station schedules one data block each time. A data stream corresponding to the primary data block is a primary data stream, and a data stream corresponding to the secondary data block is a secondary data stream.

In the case of a MIMO single stream, before being multiplied by the unitary matrix, the two input signals are correlated, and therefore it cannot be ensured that the power of the two input signals is definitely equal after the two input signals are multiplied by the unitary matrix. Therefore, a single stream precoding matrix may be restricted, that is, a precoding matrix that is used to generate the two signals multiplied by the unitary matrix is selected, to ensure that only a specific precoding matrix is selected from multiple available precoding matrices, so that after being multiplied by the unitary matrix, the two input signals in use are equal in power, and then the PAs can achieve higher work efficiency. This method of restricting a single stream precoding vector is referred to as precoding weight set restriction (Precoding Weight Set Restriction). For example, the original number of available precoding matrices is 4; however, in a single stream precoding weight set restriction scenario, only two precoding matrices in them are available, because power of the two input signals that is obtained by multiplying the other two matrices by the two input signals is not always equal.

In downlink MIMO, a UE estimates a downlink channel, and feeds back a precoding control indicator (PCI, Precoding Control Indicator) and a channel quality indicator (CQI, Channel Quality Indicator) to a base station through an uplink high speed dedicated physical control channel (HS-DPCCH, HighSpeed-Dedicated Physical Control Channel), where the PCI and the CQI that are fed back to the base station by the UE include selection information of a MIMO single stream and that of MIMO dual streams. The base station determines, with reference to a condition of the base station and according to the PCI and the CQI that are fed back by the UE, whether to schedule the downlink MIMO dual streams or to schedule the downlink MIMO single stream at a next moment.

In an example in which the number of available precoding matrices is 4, when feeding back the PCI and the CQI, the UE performs joint encoding on the PCI and the CQI. First, a 2-bit PCI ($PCI_0$ and $PCI_1$) is obtained by mapping, and then an 8-bit type A (Type A) CQI ($CQI_0$, $CQI_1$, ..., and $CQI_7$) is obtained by mapping or a 5-bit type B (Type B) CQI ($CQI_0$, $CQI_1$, ..., and $CQI_4$) is obtained by mapping, and then joint encoding is performed on the two bits obtained by mapping for the PCI and on the eight bits obtained by mapping for the Type A CQI, to obtain a joint encoding result, or joint encoding is performed on the two bits obtained by mapping for the PCI and on the five bits obtained by mapping for the Type B CQI, to obtain a joint encoding result.

When applied in the precoding weight set restriction scenario, the foregoing feedback process is poor in performance, because in the precoding weight set restriction scenario, the number of precoding matrices is further restricted, and if an existing PCI feedback mechanism is still used, PCI feedback is wasted. Therefore, there is not yet a related solution about how a UE feeds back a PCI and a CQI to a base station based on an encoding mode of precoding weight set restriction.

## SUMMARY

Embodiments of the present invention provide a method for feeding back uplink control information in a downlink MIMO mode and a user equipment, which are used to implement that a UE feeds back control information to a base station, are applicable to a precoding weight set restriction application scenario, and reduce transmit power of the UE while ensuring HS-DPCCH receive performance of the base station.

According to one aspect, an embodiment of the present invention provides a method for feeding back uplink control information in a downlink MIMO mode, including:

generating, by a user equipment UE, 1-bit precoding control indicator PCI information, where the PCI information is used to indicate a precoding matrix selected by the UE from two available precoding matrices in a precoding codebook;

generating, by the UE, channel quality indicator CQI information, where the CQI information is 8-bit type A CQI information or 5-bit type B CQI information;

performing, by the UE, joint encoding on the PCI information and the CQI information, to obtain a joint encoding result; and

feeding back, by the UE, the joint encoding result to a base station through an uplink high speed dedicated physical control channel HS-DPCCH.

According to another aspect, an embodiment of the present invention provides a user equipment, including:

a first generating unit, configured to generate 1-bit precoding control indicator PCI information, where the PCI information is used to indicate a precoding matrix selected by the UE from two available precoding matrices in a precoding codebook;

a second generating unit, configured to generate channel quality indicator CQI information, where the CQI information is 8-bit type A CQI information or 5-bit type B CQI information;

an encoding unit, configured to perform joint encoding on the PCI information and the CQI information, to obtain a joint encoding result; and

a feedback unit, configured to feed back the joint encoding result to a base station through an uplink high speed dedicated physical control channel HS-DPCCH.

It can be seen from the foregoing technical solutions that, the embodiments of the present invention have the following advantages:

In the embodiments of the present invention, a UE generates 1-bit PCI information, where the PCI information indicates a precoding matrix selected by the UE from two available precoding matrices. In a case in which precoding weight set restriction is considered, selection of the precoding vector in the precoding matrices is restricted; therefore, according to the embodiments of the present invention, it can be implemented that the UE feeds back control information to a base station based on an encoding mode of precoding weight set restriction, only if 1-bit PCI information is generated. Therefore, transmit power of the UE is reduced while ensuring HS-DPCCH receive performance of the base station.

## BRIEF DESCRIPTION OF DRAWINGS

To describe technical solutions in embodiments of the present invention more clearly, the following briefly introduces accompanying drawings required for describing the embodiments. Apparently, the accompanying drawings in the following description show merely some embodiments of the present invention, and a person skilled in the art may still derive other drawings from these accompanying drawings.

FIG. 1 is a schematic diagram of power balance processing in MIMO+HSDPA in the prior art;
FIG. 2 is a schematic diagram of a method for feeding back uplink control information in a downlink MIMO mode according to an embodiment of the present invention;
FIG. 3 is a schematic diagram of PCI and CQI joint encoding in a downlink MIMO mode according to an embodiment of the present invention;

FIG. 4 is a diagram of performance comparison between a PCI bit error rate in an embodiment of the present invention and a PCI bit error rate in the prior art;

FIG. 5 is a diagram of performance comparison between a normalized root mean square CQI bit error rate in an embodiment of the present invention and a normalized root mean square CQI bit error rate in the prior art;

FIG. 6 is a schematic structural diagram of a user equipment according to an embodiment of the present invention; and

FIG. 7 is a schematic structural diagram of another user equipment according to an embodiment of the present invention.

## DESCRIPTION OF EMBODIMENTS

Embodiments of the present invention provide a method for feeding back uplink control information in a downlink MIMO mode and a user equipment, which are used to implement that a UE feeds back control information to a base station, are applicable to a precoding weight set restriction application scenario, and reduce transmit power of the UE while ensuring HS-DPCCH receive performance of the base station.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person skilled in the art based on the embodiments of the present invention shall fall within the protection scope of the present invention.

A method for feeding back uplink control information in a downlink MIMO mode according to an embodiment of the present invention is shown in FIG. 2, and includes the following steps:

201: A user equipment generates 1-bit precoding control indicator PCI information.

The PCI information is used to indicate a precoding matrix selected by the UE from two available precoding matrices in a precoding codebook.

In this embodiment of the present invention, the PCI information generated by the user equipment (UE, User Equipment) occupies one bit, and the UE may obtain a 1-bit precoding control indicator (PCI, Precoding Control Indicator) by means of binary mapping (Binary Mapping). The PCI information obtained by mapping in this embodiment of the present invention occupies one bit. In a case in which precoding weight set restriction is considered, selection of the precoding vector in the precoding matrices is restricted; therefore, in this embodiment of the present invention, it can be implemented that the UE feeds back control information to a base station based on an encoding mode of precoding weight set restriction, only if the PCI information generated by the user equipment occupies one bit. Therefore, receive performance of the base station is improved.

It should be noted that, in this embodiment of the present invention, step 201 may specifically include that: when the UE uses a single stream, the two available precoding matrices meet the following relationship: modulus values of two elements in a first vector that is obtained by multiplying a preset unitary matrix by each precoding matrix in the two available precoding matrices are equal; and when the UE uses dual streams, the two available precoding matrices meet the following relationship: the two available precoding matrices are both unitary matrices, or are both matrices that are obtained by multiplying unitary matrices by a same number.

Step 201 includes the following two implementation manners:

A1. When the UE uses a single stream, the precoding codebook specifically refers to a single stream precoding codebook, and the UE selects a precoding matrix from two available precoding matrices in the single stream precoding codebook, and maps the precoding matrix to obtain the 1-bit PCI information.

A2. When the UE uses dual streams, the precoding codebook specifically refers to a dual stream precoding codebook, and the UE selects a precoding matrix from two available precoding matrices in the dual stream precoding codebook, and maps the precoding matrix to obtain the 1-bit PCI information.

It should be noted that, the foregoing implementation manners are two implementation manners that are differentiated according to whether a single stream or dual streams need to be used by the UE in feedback to the base station; the single stream precoding codebook includes multiple precoding matrices, from which the UE may select a precoding matrix, and then obtain the generated 1-bit PCI information by performing mapping; and the dual stream precoding codebook includes multiple precoding matrices, from which the UE may select a precoding matrix, and then obtain the generated 1-bit PCI information by performing mapping.

For step A1, if the UE uses a single stream, two precoding vectors in a single stream precoding codebook meet the following relationship: a first vector is obtained by multiplying a preset unitary matrix by each precoding matrix in the two available precoding matrices, where the modulus values of the two elements in the first vector are equal.

For example, the single stream precoding codebook is $\begin{bmatrix} w_1 \\ w_2 \end{bmatrix}$, where when $w_1$ and $w_2$ take different values, different precoding matrices can be obtained. Assuming that the preset unitary matrix is B, where B may take a value as follows: $\mathbf{B} = \begin{bmatrix} 1 & e^{i\pi/4} \\ -e^{-i\pi/4} & 1 \end{bmatrix}$, $w_1$ and $w_2$ in the single stream precoding codebook $\begin{bmatrix} w_1 \\ w_2 \end{bmatrix}$ may take values as $w_1 = \dfrac{1}{\sqrt{2}}$, and a value of $w_2$ is one of the following four cases: $w_2 = \dfrac{1+j}{2}$, or $w_2 = \dfrac{-1-j}{2}$, or $w_2 = \dfrac{1-j}{2}$, or $w_2 = \dfrac{-1+j}{2}$. That is, the single stream precoding codebook is

$$\begin{bmatrix} \dfrac{1}{\sqrt{2}} \\ \dfrac{1+j}{2} \end{bmatrix}, \begin{bmatrix} \dfrac{1}{\sqrt{2}} \\ \dfrac{1-j}{2} \end{bmatrix}, \begin{bmatrix} \dfrac{1}{\sqrt{2}} \\ \dfrac{-1+j}{2} \end{bmatrix}, \begin{bmatrix} \dfrac{1}{\sqrt{2}} \\ \dfrac{-1-j}{2} \end{bmatrix},$$ and in the single stream precoding codebook, there are two available precoding matrices $\begin{bmatrix} \dfrac{1}{\sqrt{2}} \\ \dfrac{1+j}{2} \end{bmatrix}$ and $\begin{bmatrix} \dfrac{1}{\sqrt{2}} \\ \dfrac{-1-j}{2} \end{bmatrix}$ meeting the following condition: modulus values of two elements in the first vector that is obtained by multiplying the unitary matrix B by a precoding matrix are equal, where because $\mathbf{B} \cdot \begin{bmatrix} \dfrac{1}{\sqrt{2}} \\ \dfrac{1+j}{2} \end{bmatrix} = \begin{bmatrix} \dfrac{1+j}{\sqrt{2}} \\ j \end{bmatrix}$, and $\mathbf{B} \cdot \begin{bmatrix} \dfrac{1}{\sqrt{2}} \\ \dfrac{-1-j}{2} \end{bmatrix} = \begin{bmatrix} \dfrac{1-j}{\sqrt{2}} \\ -1 \end{bmatrix}$ it can be seen that a modulus value of $\begin{bmatrix} \dfrac{1+j}{\sqrt{2}} \\ j \end{bmatrix}$ is equal to a modulus value of $\begin{bmatrix} \dfrac{1-j}{\sqrt{2}} \\ -1 \end{bmatrix}$.

In the case in which the UE uses a single stream, the two available precoding matrices in the single stream precoding codebook specifically are: $\begin{bmatrix} \dfrac{1}{\sqrt{2}} \\ \dfrac{1+j}{2} \end{bmatrix}$ and $\begin{bmatrix} \dfrac{1}{\sqrt{2}} \\ \dfrac{-1-j}{2} \end{bmatrix}$. If the precoding vector selected by the UE is $\begin{bmatrix} \dfrac{1}{\sqrt{2}} \\ \dfrac{1+j}{2} \end{bmatrix}$,

the PCI information is represented by 0, or if the precoding vector selected by the UE is $\begin{bmatrix} \dfrac{1}{\sqrt{2}} \\ \dfrac{-1-j}{2} \end{bmatrix}$, the PCI information

is represented by 1; or if the precoding vector selected by the UE is $\begin{bmatrix} \dfrac{1}{\sqrt{2}} \\ \dfrac{1+j}{2} \end{bmatrix}$ the PCI information is represented by 1,

or if the precoding vector selected by the UE is $\begin{bmatrix} \dfrac{1}{\sqrt{2}} \\ \dfrac{-1-j}{2} \end{bmatrix}$, the PCI information is represented by 0. In this case, $w_1$

and $w_2$ may take values as follows: $w_1 = \dfrac{1}{\sqrt{2}}$, and $w_2 = \dfrac{1+j}{2}$ or $w_2 = \dfrac{-1-j}{2}$. In an actual application,

specifically, $w_2$ being mapped to 0 may be represented by $w_2 = \dfrac{1+j}{2}$, and $w_2$ being mapped to 1 may be represented

by $w_2 = \dfrac{-1-j}{2}$; or $w_2$ being mapped to 1 may be represented by $w_2 = \dfrac{1+j}{2}$, and $w_2$ being mapped to 0 may be represented by $w_2 = \dfrac{-1-j}{2}$. That is, a mapping manner of $w_2$ when the UE uses a single stream may be shown in the following Table 1:

| | Value of $w_2$ in the single stream precoding codebook $\begin{bmatrix} w_1 \\ w_2 \end{bmatrix}$ when the UE performs feedback by using a single stream | Value of $w_2$ in the single stream precoding codebook $\begin{bmatrix} w_1 \\ w_2 \end{bmatrix}$ when the UE performs feedback by using a single stream |
|---|---|---|
| $\dfrac{1+j}{2}$ | 0 | 1 |
| $\dfrac{1-j}{2}$ | | |
| $\dfrac{-1+j}{2}$ | | |

(continued)

| | Value of $w_2$ in the single stream precoding codebook $\begin{bmatrix} w_1 \\ w_2 \end{bmatrix}$ when the UE performs feedback by using a single stream | Value of $w_2$ in the single stream precoding codebook $\begin{bmatrix} w_1 \\ w_2 \end{bmatrix}$ when the UE performs feedback by using a single stream |
|---|---|---|
| $\dfrac{-1-j}{2}$ | 1 | 0 |

It should be noted that, in the case in which the UE uses a single stream, when precoding weight set restriction is considered, to ensure that power of input signals that are input by the UE into two power amplifiers (PA, Power Amplifier) of the base station by using a primary antenna and a secondary antenna respectively is balanced, it is required that power obtained by multiplying the two available precoding matrices selected by the UE from single stream precoding matrices by the unitary matrix is equal. It is assumed that the two available precoding matrices selected from multiple precoding matrices in the single stream precoding codebook are $w_1$ and the preset multiple precoding matrices in the single stream precoding codebook are $\begin{bmatrix} w_1 \\ w_2 \end{bmatrix}$ and the preset unitary matrix is B, where $w_1$ is a preset fixed value, and

$w_2 = \dfrac{1+j}{2}$ or $w_2 = \dfrac{-1-j}{2}$ that is, $w_2$ takes only two values, and needs to be represented by only one bit. Then, the power obtained by multiplying the unitary matrix by precoding vectors obtained when $w_2$ takes two different values is equal. However, value assignment to $w_1$ and $w_2$ herein is merely a feasible manner, and is not intended to limit the present invention. Certainly, according to the implementation manners of the present invention, other values may also be assigned to the unitary matrix and the precoding matrices, which is not limited herein.

For step A2, if the UE uses dual streams, the two available precoding matrices in the dual stream precoding codebook meet the following condition: the two available precoding matrices in the dual stream precoding codebook are both unitary matrices, or are both matrices that are obtained by multiplying unitary matrices by a same number.

For example, the dual stream precoding codebook is $\begin{bmatrix} w_3 & w_5 \\ w_4 & w_6 \end{bmatrix}$ where when $w_3$, $w_4$, $w_5$, and $w_6$ take

different values, different precoding matrices can be obtained, $w_5$ and $w_3$ are equal and are both a preset fixed value, $w_6 = -w_4$, and the two available precoding matrices in the dual stream precoding codebook that are obtained when $w_4$ takes different values meet the following relationship: the two available precoding matrices are both unitary matrices, or the two available precoding matrices are both matrices that are obtained by multiplying unitary matrices by a same number.

It should be noted that, in the case in which the UE uses dual streams, the four precoding matrices (where the precoding matrices are unitary matrices or are obtained by multiplying unitary matrices by one value) all can meet the following condition: power of input signals that enter PAs is equal after the input signals are multiplied by a matrix B. The four precoding matrices in the case of a single stream are reduced to two available precoding matrices, because for one matrix B, only two in four vectors in the single stream precoding codebook can ensure that power of input signals that enter the PAs is equal after the input signals are multiplied by B, where the single stream precoding codebook is dedicated to the single stream. In the case of dual streams, the four precoding matrices all can meet the following condition: the power of the input signals that enter the PAs is equal after the input signals are multiplied by the matrix B. In this embodiment of the present invention, the four precoding matrices of the dual streams may be reduced to two, because either of two matrices such as $\begin{bmatrix} w_3 & w_5 \\ w_4 & w_6 \end{bmatrix}$ and $\begin{bmatrix} w_5 & w_3 \\ w_6 & w_4 \end{bmatrix}$ may be selected for feedback, for example, the former one is selected for feedback. If it is expected that the latter one is selected, a result that needs to be fed back can be obtained by feeding back the former matrix and exchanging PCIs of the two streams.

The power of the input signals that are input by the UE into the two power amplifiers of the base station by using the primary antenna and the secondary antenna respectively is balanced, and the two precoding matrices that are obtained by the UE from the dual stream precoding codebook meet the following condition: they are both unitary matrices, or are both matrices that are obtained by multiplying unitary matrices by a same number, that is, the two available precoding matrices in the dual stream precoding codebook are $\begin{bmatrix} w_3 & w_5 \\ w_4 & w_6 \end{bmatrix}$ and $\begin{bmatrix} w_5 & w_3 \\ w_6 & w_4 \end{bmatrix}$ where $w_5$

and $w_3$ are equal and are both a preset fixed value, $w_6 = -w_4$, $w_4$ takes only two values and only needs to be represented by only one bit, and a relationship that the two available precoding matrices $\begin{bmatrix} w_3 & w_5 \\ w_4 & w_6 \end{bmatrix} w_6$ and $\begin{bmatrix} w_5 & w_3 \\ w_6 & w_4 \end{bmatrix}$ meet

is as follows: either of the two matrices can be obtained by exchanging two columns of elements of the other matrix;

that is, when the two available precoding matrices are to be fed back, it does not need to feed back both $\begin{bmatrix} w_3 & w_5 \\ w_4 & w_6 \end{bmatrix}$

and $\begin{bmatrix} w_5 & w_3 \\ w_6 & w_4 \end{bmatrix}$ and only one of them needs to be fed back, and when the other is required, the other may be obtained by exchanging the two columns of elements. In this case, $w_3$ and $w_5$ may take values as follows: $w_5 = w_3 = \dfrac{1}{\sqrt{2}}$,

and a value of $w_4$ may be any one of the following four cases: a first case: $w_4 = \dfrac{1+j}{2}$ or $w_4 = \dfrac{1-j}{2}$; a second

case: $w_4 = \dfrac{1+j}{2}$ or $w_4 = \dfrac{-1+j}{2}$; a third case: $w_4 = \dfrac{-1-j}{2}$ or $w_4 = \dfrac{1-j}{2}$; and a fourth case:

$w_4 = \dfrac{-1-j}{2}$ or $w_4 = \dfrac{-1+j}{2}$. That is, the dual stream precoding codebook is:

$$\begin{bmatrix} \dfrac{1}{\sqrt{2}} & \dfrac{1}{\sqrt{2}} \\ \dfrac{1+j}{2} & -\dfrac{1+j}{2} \end{bmatrix}, \begin{bmatrix} \dfrac{1}{\sqrt{2}} & \dfrac{1}{\sqrt{2}} \\ \dfrac{1-j}{2} & -\dfrac{1-j}{2} \end{bmatrix}, \begin{bmatrix} \dfrac{1}{\sqrt{2}} & \dfrac{1}{\sqrt{2}} \\ \dfrac{-1+j}{2} & \dfrac{1-j}{2} \end{bmatrix}, \begin{bmatrix} \dfrac{1}{\sqrt{2}} & \dfrac{1}{\sqrt{2}} \\ \dfrac{-1-j}{2} & \dfrac{1+j}{2} \end{bmatrix}$$ where $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and

$$\begin{bmatrix} \dfrac{1}{\sqrt{2}} & \dfrac{1}{\sqrt{2}} \\ \dfrac{-1-j}{2} & \dfrac{1+j}{2} \end{bmatrix}$$ or $$\begin{bmatrix} \dfrac{1}{\sqrt{2}} & \dfrac{1}{\sqrt{2}} \\ \dfrac{1-j}{2} & -\dfrac{1-j}{2} \end{bmatrix}$$ and $$\begin{bmatrix} \dfrac{1}{\sqrt{2}} & \dfrac{1}{\sqrt{2}} \\ \dfrac{-1+j}{2} & \dfrac{1-j}{2} \end{bmatrix}$$ in the dual stream precoding codebook meet the following condition: the two precoding matrices are both unitary matrices or are both matrices that are obtained by multiplying unitary matrices by a same number. It can be seen that, in $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$,

one of the precoding matrices can be obtained by exchanging two columns of elements of the other precoding matrix;

similarly, in $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ and $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, one of the precoding matrices can be obtained by exchanging two columns of elements of the other precoding matrix.

When the two available precoding matrices are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, if the precoding

matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 1; or if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 1, or if the precoding matrix selected by the

UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 0.

When the two available precoding matrices are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, if the precoding

matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 1; or

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 0.

When the two available precoding matrices are $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding

matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1; or

if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0.

When the two available precoding matrices are $\begin{bmatrix} \dfrac{1}{\sqrt{2}} & \dfrac{1}{\sqrt{2}} \\ \dfrac{-1+j}{2} & \dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding

matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1; or

if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0.

It should be noted that, value assignment to $w_3$ and $w_4$ herein is merely a feasible manner, and is not intended to limit the present invention. Certainly, according to the implementation manners of the present invention, other values may also be assigned to the unitary matrix and the precoding matrices, which is not limited herein.

As one of the implementation manners, a mapping manner of $w_4$ in the case of dual streams may be shown in the following Table 2:

| | PCI when Value of $w_4$ in the precoding matrix $\begin{bmatrix} w_3 & w_5 \\ w_4 & w_6 \end{bmatrix}$ or $\begin{bmatrix} w_5 & w_3 \\ w_6 & w_4 \end{bmatrix}$ in the case of dual stream | Same with the content in the left box | Same with the content in the left box | Same with the content in the left box | Same with the content in the left box | Same with the content in the left box | Same with the content in the left box | Same with the content in the left box |
|---|---|---|---|---|---|---|---|---|
| $\dfrac{1+j}{2}$ | 0 | 1 | 0 | 1 | | | |
| $\dfrac{1-j}{2}$ | 1 | 0 | | | 0 | 1 | |
| $\dfrac{-1+j}{2}$ | | | 1 | 0 | | | 0 | 1 |
| $\dfrac{-1-j}{2}$ | | | | | 1 | 0 | 1 | 0 |

202: The UE generates channel quality indicator CQI information.

The CQI information is 8-bit type A CQI information or 5-bit type B CQI information.

In this embodiment of the present invention, channel quality indicator (CQI, Channel Quality Indicator) information generated by the UE is classified into two types: type A and type B, where CQI information of the type A occupies eight bits, and CQI information of the type B occupies five bits. For details about how to generate the CQI information, refer to implementation manners of the prior art, and details are not described herein again.

It should be noted that, in this embodiment of the present invention, for step 201 and step 202, step 201 may be performed before step 202; step 202 may be performed before step 201; or steps 201 and 202 may be performed at the same time. How to perform the steps may be determined with reference to an actual application scenario, and the embodiment herein is merely for description and poses no limitation.

203: The UE performs joint encoding on the PCI information and the CQI information, to obtain a joint encoding result.

In this embodiment of the present invention, after the UE generates the PCI information and the CQI information, the UE performs joint encoding on the PCI information and the CQI information, to obtain a joint encoding result. Specifically, after generating the 1-bit PCI information and the 8-bit type A CQI information, the UE may perform concatenation (Concatenation) on the PCI information and the type A CQI information and then perform joint encoding, to obtain a joint encoding result, where the joint encoding refers to concatenating the PCI and the CQI to obtain a new sequence, and then performing encoding to obtain a joint encoding result, to implement feedback to the base station.

It should be noted that, there may be multiple implementation manners for the UE to perform joint encoding; and in an actual application, when the CQI information is the 8-bit type A CQI information, the performing, by the UE, joint encoding on the PCI information and the CQI information, to obtain a joint encoding result may specifically include:

concatenating, by the UE, the PCI information and the CQI information to form a 9-bit sequence $a_n$, that is, concatenating, by the UE, the 1-bit PCI information and the 8-bit type A CQI information to form the 9-bit sequence $a_n$, where n = 0,...,8; and

calculating, by the UE, an $i^{th}$ joint encoding result $b_i$ in the following manner:

$$b_i = \left( \sum_{n=0}^{8} a_n M_{i,S_n} \right) \bmod 2$$,

where $M_{i,S_n}$ indicates a basic sequence of HS-DPCCH encoding in a MIMO mode, and $S_n \in \{0,1,2,3,4,5,6,7,8,9,10\}$.

It should be noted that, $a_n$ is a sequence that is obtained by concatenating the 1-bit PCI information and the 8-bit type A CQI information, and has a total of nine bits; and $M_{i,S_n}$ is the basic sequence of HS-DPCCH encoding in the MIMO mode, as shown in the following Table 3:

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 0 | 0 | 0 | 0 | 0 | 0 | 0 | 0 | 0 | 0 |
| 1 | 0 | 1 | 0 | 0 | 0 | 0 | 0 | 0 | 0 | 0 | 0 |
| 2 | 0 | 0 | 0 | 1 | 0 | 0 | 0 | 0 | 0 | 0 | 0 |
| 3 | 0 | 0 | 0 | 0 | 1 | 0 | 0 | 0 | 0 | 0 | 0 |
| 4 | 0 | 0 | 0 | 0 | 0 | 1 | 0 | 0 | 0 | 0 | 0 |
| 5 | 0 | 0 | 0 | 0 | 0 | 0 | 0 | 1 | 0 | 0 | 0 |
| 6 | 0 | 0 | 0 | 0 | 0 | 0 | 0 | 0 | 1 | 0 | 1 |
| 7 | 0 | 0 | 0 | 0 | 0 | 0 | 0 | 0 | 0 | 1 | 1 |
| 8 | 1 | 0 | 1 | 0 | 0 | 0 | 1 | 1 | 1 | 0 | 1 |
| 9 | 1 | 1 | 0 | 1 | 0 | 0 | 0 | 1 | 1 | 1 | 1 |
| 10 | 0 | 1 | 1 | 0 | 1 | 0 | 0 | 0 | 1 | 1 | 1 |
| 11 | 1 | 0 | 1 | 1 | 0 | 1 | 0 | 0 | 0 | 1 | 0 |
| 12 | 1 | 1 | 0 | 1 | 1 | 0 | 1 | 0 | 0 | 0 | 0 |
| 13 | 1 | 1 | 1 | 0 | 1 | 1 | 0 | 1 | 0 | 0 | 0 |
| 14 | 0 | 1 | 1 | 1 | 0 | 1 | 1 | 0 | 1 | 0 | 1 |
| 15 | 0 | 0 | 1 | 1 | 1 | 0 | 1 | 1 | 0 | 1 | 0 |
| 16 | 0 | 0 | 0 | 1 | 1 | 1 | 0 | 1 | 1 | 0 | 1 |
| 17 | 1 | 0 | 0 | 0 | 1 | 1 | 1 | 0 | 1 | 1 | 1 |
| 18 | 0 | 1 | 0 | 0 | 0 | 1 | 1 | 1 | 0 | 1 | 0 |
| 19 | 1 | 1 | 1 | 1 | 1 | 1 | 1 | 1 | 1 | 1 | 1 |

For example, when i is 3 and $S_n$ is 3, $M_{i,S_n}$ is $M_{3,3}$, and a corresponding value indicated in Table 3 is 0; and when i is 9 and $S_n$ is 3, $M_{i,S_n}$ is $M_{9,3}$, and a corresponding value indicated in Table 3 is 1.

In addition, a maximum value of n is a sum of the number of bits occupied by the PCI information and the number of bits occupied by the type A CQI information, that is, the PCI occupies one bit, and the CQI occupies eight bits; and therefore a value of n ranges from 0 to 8.

In an actual application, when the CQI information is the 5-bit type B CQI information, the performing, by the UE, joint encoding on the PCI information and the CQI information, to obtain a joint encoding result may specifically include:

concatenating, by the UE, the PCI information and the CQI information to form a 6-bit sequence $a_n$, that is, concatenating, by the UE, the 1-bit PCI information and the 5-bit type B CQI information to form the 6-bit sequence $a_n$, where n = 0,...,5; and

calculating, by the UE, an $i^{th}$ joint encoding result $c_i$ in the following manner:

$$c_i = \left( \sum_{n=0}^{5} a_n M_{i,T_n} \right) \bmod 2$$ ,

where $M_{i,T_n}$ indicates a basic sequence of HS-DPCCH encoding in a MIMO mode, and $T_n \in \{0,1,2,3,4,5,6,7,8,9,10\}$.

It should be noted that, $M_{i,T_n}$ may also be the basic sequence of HS-DPCCH encoding in the MIMO mode, as shown in the foregoing Table 3. For example, when i is 3 and $T_n$ is 3, $M_{i,T_n}$ is $M_{3,3}$, and a corresponding value indicated in Table 3 is 0; and when i is 9 and $T_n$ is 3, $M_{i,T_n}$ is $M_{9,3}$, and a corresponding value indicated in Table 3 is 1, that is, when n is 0, 1, 2, 3, 4, or 5, $T_n$ may be specifically $T_0 = 0, T_1 = 1, T_2 = 3, T_3 = 4, T_4 = 5, T_5 = 10$ or $T_0 = 0, T_1 = 1, T_2 = 4, T_3 = 5, T_4 = 7, T_5 = 10$.

In addition, a maximum value of n is a sum of the number of bits occupied by the PCI information and the number of bits occupied by the CQI information, that is, the PCI information occupies one bit, and the CQI information occupies five bits; and therefore the value of n ranges from 0 to 5.

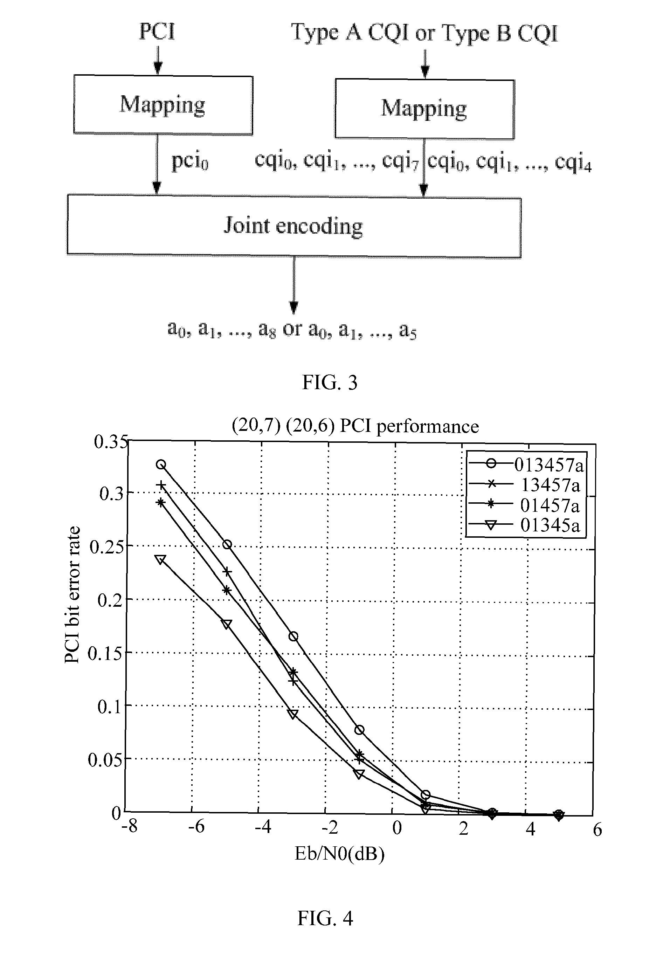

To more clearly describe an implementation procedure of step 201 to step 203 according to this embodiment of the present invention, refer to FIG. 3, which is a schematic diagram of PCI and CQI joint encoding in a downlink MIMO mode according to an embodiment of the present invention. When the UE uses a single stream, in FIG. 3, the UE selects a precoding matrix from the two available precoding matrices in the single stream precoding codebook, to obtain a first precoding matrix (that is, the PCI described in FIG. 3), and maps the PCI to obtain $pci_0$. When the UE uses dual streams, in FIG. 3, the UE selects a precoding matrix from the two available precoding matrices in the dual stream precoding codebook, to obtain a first precoding matrix (that is, the PCI described in FIG. 3), and maps the PCI to obtain $pci_0$. The UE generates the 8-bit type A CQI information: $cqi_0$, $cqi_1$, $cqi_2$, $cqi_3$, $cqi_4$, $cqi_5$, $cqi_6$, and $cqi_7$, or the UE generates the 5-bit type B CQI information: $cqi_0$, $cqi_1$, $cqi_2$, $cqi_3$, and $cqi_4$. The UE concatenates the 1-bit PCI information and the 8-bit type A CQI information to form the 9-bit sequence $a_n$, and the UE performs joint encoding on the PCI information and the type A CQI information, to obtain a first joint encoding result $b_i = \left( \sum_{n=0}^{8} a_n M_{i,S_n} \right) \bmod 2$ where n = 0,...,8. Alternatively, the UE concatenates the 1-bit PCI information and the 5-bit type B CQI information to form the 6-bit sequence $a_n$, and the UE perform joint encoding on the PCI information and the type B CQI information, to obtain a second joint encoding result $c_i = \left( \sum_{n=0}^{5} a_n M_{i,T_n} \right) \bmod 2$ where n = 0,...,5.

204: The UE feeds back the joint encoding result to a base station through an HS-DPCCH.

In this embodiment of the present invention, after the UE obtains the joint encoding result, the UE feeds back the joint encoding result to the base station through the HS-DPCCH. In this embodiment of the present invention, the PCI information used when the UE performs joint encoding only needs to occupy one bit, a problem that the number of bits of the PCI in the case of precoding weight set restriction is reduced is considered. Therefore, when receiving the joint encoding result according to the method provided by this embodiment of the present invention, the base station can achieve desirable receive performance.

In this embodiment of the present invention, a UE generates 1-bit PCI information, where the PCI information indicates a precoding matrix selected by the UE from two available precoding matrices. In a case in which precoding weight set restriction is considered, selection of the precoding vector in the precoding matrices is restricted; therefore, according to this embodiment of the present invention, it can be implemented by generating 1-bit PCI information that the UE feeds back control information to a base station based on an encoding mode of precoding weight set restriction. Therefore, transmit power of the UE is reduced while ensuring HS-DPCCH receive performance of the base station.

To more clearly describe a problem that receive performance of a base station can be improved in an embodiment of the present invention, relative to the prior art in which a case of precoding weight set restriction is not considered, the following uses one actual application example for a detailed description. An example in which a UE generates 5-bit type B CQI information is used. The UE generates 1-bit PCI information. Therefore, in this embodiment of the present invention, an encoding result that is obtained by the UE by performing joint encoding occupies six bits (an encoding mode provided by this embodiment of the present invention is referred to as (20,6) encoding), but in a same condition, an encoding result that is obtained by performing joint encoding according to an encoding mode (PCI information occupies two bits) of the prior art occupies seven bits (joint encoding performed according to the encoding mode of the prior art is referred to as (20,7) encoding), and it is assumed that a base station serving as a receive end knows two precoding matrices of a PCI that is possibly sent. As shown in FIG. 4, which is a diagram of performance comparison between a PCI bit error rate in an embodiment of the present invention and a PCI bit error rate in the prior art, FIG. 4 is a diagram of comparison between PCI error rates of different encoding solutions on an additive white Gaussian noise channel and in conditions of different bit signal-to-noise ratios Eb/N0. The horizontal axis Eb/No indicates an energy-to-noise power density (noise ratio) ratio of each bit, and the vertical axis indicates a PCI bit error rate, where a curve "013457a" represents sequence numbers of seven base sequences that are selected from a base sequence list according to the encoding mode of the prior art and correspond to the existing (20,7) encoding mode, and a curve "13457a", a curve "01457a", and a curve "01345a" each represent sequence numbers of six base sequences that are selected from the base sequence list according to the encoding mode provided by this embodiment of the present invention and correspond to the (20,6) encoding mode provided by this embodiment of the present invention. An encoding result is:

$$c_i = \left( \sum_{n=0}^{5} a_n M_{i,T_n} \right) \mod 2 \quad,$$

where $T_0=0, T_1=1, T_2=3, T_3=4, T_4=5, T_5=10$ . It can be seen from FIG. 4 that, if the encoding mode is not changed and the existing (20,7) encoding mode is still used, with a same Eb/No, values of PCI bit error rates corresponding to the three curves (the curve "13457a", the curve "01457a", and the curve "01345a") that are implemented by this embodiment of the present invention are less than a value of the PCI bit error rate corresponding to the curve "013457a" in the prior art.

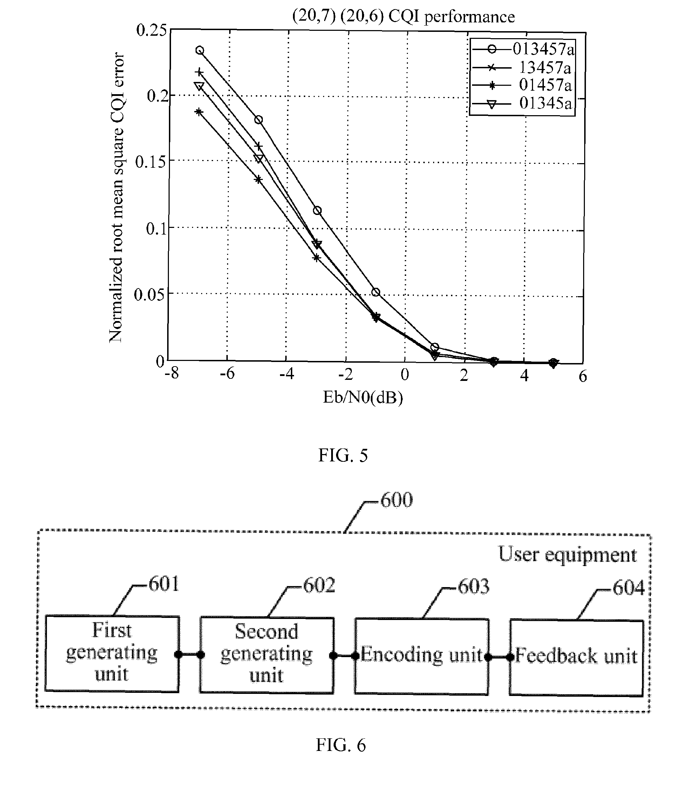

As shown in FIG. 5, which is a diagram of performance comparison between a normalized root mean square CQI bit error rate in an embodiment of the present invention and a normalized root mean square CQI bit error rate in the prior art, FIG. 5 is a diagram of comparison between normalized root mean square CQI errors of different encoding solutions on an additive white Gaussian noise channel and in conditions of different bit signal-to-noise ratios Eb/N0. The horizontal axis Eb/No indicates an energy-to-noise power density (noise ratio) ratio of each bit, and the vertical axis indicates a normalized root mean square CQI bit error rate, where a curve "013457a" represents sequence numbers of seven base sequences that are selected from a base sequence list and correspond to the existing (20,7) encoding mode, and a curve "13457a", a curve "01457a", and a curve "01345a" each represent sequence numbers of six base sequences that are selected from the base sequence list and correspond to the (20,6) encoding mode provided by this embodiment of the present invention. An encoding result is: $c_i = \left( \sum_{n=0}^{5} a_n M_{i,T_n} \right) \mod 2 \quad,$ where $T_0=0, T_1=1, T_2=3, T_3=4, T_4=5, T_5$

=10. It can be seen from FIG. 5 that, if the encoding mode is not changed and the existing (20,7) encoding mode is still used, with a same Eb/No, values of normalized root mean square CQI bit error rates corresponding to the three curves (the curve "13457a", the curve "01457a", and the curve "01345a") that are implemented by this embodiment of the present invention are less than a value of a normalized root mean square CQI bit error rate corresponding to the curve "013457a" in the prior art.

The foregoing embodiments introduce a method for feeding back uplink control information in a downlink MIMO mode according to an embodiment of the present invention, and the following introduces a user equipment according to an embodiment of the present invention. As shown in FIG. 6, a user equipment 600 includes:

a first generating unit 601, configured to generate 1-bit precoding control indicator PCI information, where the PCI information is used to indicate a precoding matrix selected by the UE from two available precoding matrices in a precoding codebook;
a second generating unit 602, configured to generate channel quality indicator CQI information, where the CQI information is 8-bit type A CQI information or 5-bit type B CQI information;
an encoding unit 603, configured to perform joint encoding on the PCI information and the CQI information, to obtain a joint encoding result; and
a feedback unit 604, configured to feed back the joint encoding result to a base station through an uplink high speed dedicated physical control channel HS-DPCCH.

It should be noted that, for the first generating unit 601 provided by this embodiment of the present invention, a feasible manner is that, when the UE uses a single stream, the first generating unit 601 is specifically configured to generate the PCI information in a condition that the two available precoding matrices meet the following relationship:

modulus values of two elements in a first vector that is obtained by multiplying a preset unitary matrix by each precoding matrix in the two available precoding matrices are equal.

Specifically, the first generating unit 601 is specifically configured to: if the precoding vector selected by the

UE is $\begin{bmatrix} \dfrac{1}{\sqrt{2}} \\ \dfrac{1+j}{2} \end{bmatrix}$, the PCI information is represented by 0, or if the precoding vector selected by the UE is $\begin{bmatrix} \dfrac{1}{\sqrt{2}} \\ \dfrac{-1-j}{2} \end{bmatrix}$,

the PCI information is represented by 1; or

if the precoding vector selected by the UE is $\begin{bmatrix} \dfrac{1}{\sqrt{2}} \\ \dfrac{1+j}{2} \end{bmatrix}$, the PCI information is represented by 1, or if the precoding vector selected by the UE is $\begin{bmatrix} \dfrac{1}{\sqrt{2}} \\ \dfrac{-1-j}{2} \end{bmatrix}$, the PCI information is represented by 0.

It should be noted that, for the first generating unit 601 provided by this embodiment of the present invention, another feasible manner is that, when the UE uses dual streams, the first generating unit is specifically configured to generate the PCI information in a condition that the two available precoding matrices meet the following relationship:

the two available precoding matrices are both unitary matrices, or are both matrices that are obtained by multiplying unitary matrices by a same number.

Specifically, the first generating unit 601 is specifically configured to: when the two available precoding matrices

are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{1-j}{2} & -\dfrac{1-j}{2} \end{bmatrix}$,

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ the PCI information is represented by 0, or if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ the PCI information is represented by 1, or

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ the PCI information is represented by 1, or if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{-1+j}{2} & \dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$ the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0.

It should be noted that, for the encoding unit 603, a feasible manner is that, when the CQI information is the 8-bit type A CQI information, the encoding unit 603 is specifically configured to concatenate the PCI information and the CQI information to form a 9-bit sequence $a_n$, where n = 0,...,8, and calculate an $i^{th}$ joint encoding result $b_i$ in the following manner:

$$b_i = \left( \sum_{n=0}^{8} a_n M_{i,S_n} \right) \mathrm{mod}\, 2$$

,

where $M_{i,S_n}$ indicates a basic sequence of HS-DPCCH encoding in a MIMO mode, $S_n \in \{0,1,2,3,4,5,6,7,8,9,10\}$, and n = 0,...,8.

Alternatively, when the CQI information is the 5-bit type B CQI information, the encoding unit 603 is specifically configured to concatenate the PCI information and the CQI information to form a 6-bit sequence $a_n$, where n = 0,...,5, and calculate an i$^{th}$ joint encoding result $c_i$ in the following manner:

$$c_i = \left( \sum_{n=0}^{5} a_n M_{i,T_n} \right) \mathrm{mod}\, 2$$

,

where $M_{i,T_n}$ indicates a basic sequence of HS-DPCCH encoding in a MIMO mode, $T_n \in \{0,1,2,3,4,5,6,7,8,9,10\}$, and n = 0,...,5.

It should be noted that content such as information exchange between the modules/units of the apparatus and execution processes thereof is based on the same idea with the method embodiments of the present invention, and produces the same technical effects as the method embodiments of the present invention. For the specific content, refer to the description in the method embodiment of the present invention shown in FIG. 2, and details are not described herein again.

In this embodiment of the present invention, a first generating unit generates 1-bit PCI information, where the PCI information indicates a precoding matrix selected by a UE from two available precoding matrices. In a case in which precoding weight set restriction is considered, selection of the precoding vector in the precoding matrices is restricted; therefore, according to this embodiment of the present invention, it can be implemented by generating 1-bit PCI information that the UE feeds back control information to a base station based on an encoding mode of precoding weight set restriction. Therefore, receive performance of the base station is improved, and transmit power of the UE is reduced while ensuring HS-DPCCH receive performance of the base station.

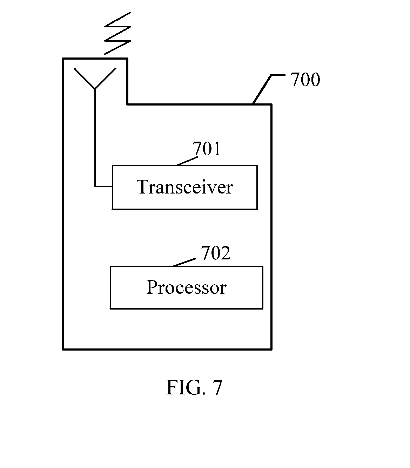

In addition, an embodiment of the present invention further provides another user equipment. Referring to FIG. 7, a user equipment 700 includes: a processor 701 (Processor) and a transceiver 702 (Transceiver), where the processor 701 is configured to generate 1-bit precoding control indicator PCI information, where the PCI information is used to indicate a precoding matrix selected by the UE from two available precoding matrices in a precoding codebook; generate channel quality indicator CQI information, where the CQI information is 8-bit type A CQI information or 5-bit type B CQI information; and perform joint encoding on the PCI information and the CQI information, to obtain a joint encoding result; and

the transceiver 702 is configured to feed back the joint encoding result to a base station through an uplink high speed dedicated physical control channel HS-DPCCH.

For functions executed by the processor 701 and the transceiver 702 and specific forms of the generated information, refer to the foregoing method embodiments, and details are not described herein again.

It should be noted that, the processor 701 provided by this embodiment of the present invention may be specifically implemented by using a logic integrated circuit.

A person of ordinary skill in the art may understand that all or a part of the steps of the methods in this embodiments may be implemented by a program instructing related hardware. The program may be stored in a computer readable storage medium. The storage medium may be a read-only memory, a magnetic disk, an optical disc, or the like.

The foregoing describes in detail a method for feeding back uplink control information in a downlink MIMO mode and a user equipment that are provided by the present invention. A person of ordinary skill in the art may make variations to the specific implementation manners and application range according to the idea of the embodiments of the present invention. In conclusion, content of this specification shall not be construed as a limitation on the present invention.

### Claims

1. A method for feeding back uplink control information in a downlink multiple input multiple output MIMO mode, comprising:

generating, by a user equipment UE, 1-bit precoding control indicator PCI information, wherein the PCI information is used to indicate a precoding matrix selected by the UE from two available precoding matrices in a precoding codebook;

generating, by the UE, channel quality indicator CQI information, wherein the CQI information is 8-bit type A CQI information or 5-bit type B CQI information;

performing, by the UE, joint encoding on the PCI information and the CQI information, to obtain a joint encoding result; and

feeding back, by the UE, the joint encoding result to a base station through an uplink high speed dedicated physical control channel HS-DPCCH.

2. The method according to claim 1, wherein when the UE uses a single stream, the two available precoding matrices meet the following relationship:

modulus values of two elements in a first vector that is obtained by multiplying a preset unitary matrix by each precoding matrix in the two available precoding matrices are equal.

3. The method according to claim 1, wherein when the UE uses dual streams, the two available precoding matrices meet the following relationship:

the two available precoding matrices are both unitary matrices, or are both matrices that are obtained by multiplying unitary matrices by a same number.

4. The method according to claim 2, wherein the two available precoding matrices specifically are:

$$\begin{bmatrix} \dfrac{1}{\sqrt{2}} \\ \dfrac{1+j}{2} \end{bmatrix} \text{ and } \begin{bmatrix} \dfrac{1}{\sqrt{2}} \\ \dfrac{-1-j}{2} \end{bmatrix}.$$

5. The method according to claim 4, wherein if the precoding vector selected by the UE is

$\begin{bmatrix} \dfrac{1}{\sqrt{2}} \\ \dfrac{1+j}{2} \end{bmatrix}$ the PCI information is represented by 0, or if the precoding vector selected by the UE is $\begin{bmatrix} \dfrac{1}{\sqrt{2}} \\ \dfrac{-1-j}{2} \end{bmatrix}$,

the PCI information is represented by 1; or

if the precoding vector selected by the UE is $\begin{bmatrix} \dfrac{1}{\sqrt{2}} \\ \dfrac{1+j}{2} \end{bmatrix}$, the PCI information is represented by 1,

or if the precoding vector selected by the UE is $\begin{bmatrix} \dfrac{1}{\sqrt{2}} \\ \dfrac{-1-j}{2} \end{bmatrix}$, the PCI information is represented by 0.

6. The method according to claim 3, wherein the two available precoding matrices specifically are:

$$\begin{bmatrix} \dfrac{1}{\sqrt{2}} & \dfrac{1}{\sqrt{2}} \\ \dfrac{1+j}{2} & -\dfrac{1+j}{2} \end{bmatrix} \text{ and } \begin{bmatrix} \dfrac{1}{\sqrt{2}} & \dfrac{1}{\sqrt{2}} \\ \dfrac{1-j}{2} & -\dfrac{1-j}{2} \end{bmatrix};$$

or

$$\begin{bmatrix} \dfrac{1}{\sqrt{2}} & \dfrac{1}{\sqrt{2}} \\ \dfrac{1+j}{2} & -\dfrac{1+j}{2} \end{bmatrix} \text{ and } \begin{bmatrix} \dfrac{1}{\sqrt{2}} & \dfrac{1}{\sqrt{2}} \\ \dfrac{-1+j}{2} & \dfrac{1-j}{2} \end{bmatrix};$$

or

$$\begin{bmatrix} \dfrac{1}{\sqrt{2}} & \dfrac{1}{\sqrt{2}} \\ \dfrac{1-j}{2} & -\dfrac{1-j}{2} \end{bmatrix} \text{ and } \begin{bmatrix} \dfrac{1}{\sqrt{2}} & \dfrac{1}{\sqrt{2}} \\ \dfrac{-1-j}{2} & \dfrac{1+j}{2} \end{bmatrix};$$

or

$$\begin{bmatrix} \dfrac{1}{\sqrt{2}} & \dfrac{1}{\sqrt{2}} \\ \dfrac{-1+j}{2} & \dfrac{1-j}{2} \end{bmatrix} \text{ and } \begin{bmatrix} \dfrac{1}{\sqrt{2}} & \dfrac{1}{\sqrt{2}} \\ \dfrac{-1-j}{2} & \dfrac{1+j}{2} \end{bmatrix}.$$

7. The method according to claim 6, wherein:

when the two available precoding matrices are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, if the precoding

matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, if the precoding

matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding

matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{-1+j}{2} & \dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding

matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0.

8. The method according to claim 1, wherein when the CQI information is the 8-bit type A CQI information, the performing, by the UE, joint encoding on the PCI information and the CQI information, to obtain a joint encoding result comprises:

concatenating, by the UE, the PCI information and the CQI information to form a 9-bit sequence $a_n$, wherein n = 0,...,8; and
calculating, by the UE, an $i^{th}$ joint encoding result $b_i$ in the following manner:

$$b_i = \left( \sum_{n=0}^{8} a_n M_{i,S_n} \right) \bmod 2 \quad ,$$

wherein $M_{i,S_n}$ indicates a basic sequence of HS-DPCCH encoding in a MIMO mode, and $S_n \in \{0,1,2,3,4,5,6,7,8,9,10\}$.

9. The method according to claim 1, wherein when the CQI information is the 5-bit type B CQI information, the performing, by the UE, joint encoding on the PCI information and the CQI information, to obtain a joint encoding result comprises:

concatenating, by the UE, the PCI information and the CQI information to form a 6-bit sequence $a_n$, wherein n = 0,...,5; and
calculating, by the UE, an $i^{th}$ joint encoding result $c_i$ in the following manner:

$$c_i = \left( \sum_{n=0}^{5} a_n M_{i,T_n} \right) \bmod 2 \quad ,$$

wherein $M_{i,T_n}$ indicates a basic sequence of HS-DPCCH encoding in a MIMO mode, and

$$T_n \in \{0,1,2,3,4,5,6,7,8,9,10\} \; .$$

10. The method according to claim 9, wherein:

$T_n$ is $T_0 = 0, T_1 = 1, T_2 = 3, T_3 = 4, T_4 = 5, T_5 = 10$, or
$T_n$ is $T_0 = 0, T_1 = 1, T_2 = 4, T_3 = 5, T_4 = 7, T_5 = 10$

11. A user equipment UE, comprising:

a first generating unit, configured to generate 1-bit precoding control indicator PCI information, wherein the PCI information is used to indicate a precoding matrix selected by the UE from two available precoding matrices in a precoding codebook;

a second generating unit, configured to generate channel quality indicator CQI information, wherein the CQI information is 8-bit type A CQI information or 5-bit type B CQI information;

an encoding unit, configured to perform joint encoding on the PCI information and the CQI information, to obtain a joint encoding result; and

a feedback unit, configured to feed back the joint encoding result to a base station through an uplink high speed dedicated physical control channel HS-DPCCH.

12. The user equipment according to claim 11, wherein when the UE uses a single stream, the first generating unit is specifically configured to generate the PCI information in a condition that the two available precoding matrices meet the following relationship:

modulus values of two elements in a first vector that is obtained by multiplying a preset unitary matrix by each precoding matrix in the two available precoding matrices are equal.

13. The user equipment according to claim 11, wherein when the UE uses dual streams, the first generating unit is specifically configured to generate the PCI information in a condition that the two available precoding matrices meet the following relationship:

the two available precoding matrices are both unitary matrices, or are both matrices that are obtained by multiplying unitary matrices by a same number.

14. The user equipment according to claim 12, wherein the first generating unit is specifically configured to: if the precoding vector selected by the UE is $\begin{bmatrix} \dfrac{1}{\sqrt{2}} \\ \dfrac{1+j}{2} \end{bmatrix}$, the PCI information is represented by 0, or if the precoding vector selected by the UE is $\begin{bmatrix} \dfrac{1}{\sqrt{2}} \\ \dfrac{-1-j}{2} \end{bmatrix}$, the PCI information is represented by 1; or

if the precoding vector selected by the UE is $\begin{bmatrix} \dfrac{1}{\sqrt{2}} \\ \dfrac{1+j}{2} \end{bmatrix}$, the PCI information is represented by 1, or if the precoding vector selected by the UE is $\begin{bmatrix} \dfrac{1}{\sqrt{2}} \\ \dfrac{-1-j}{2} \end{bmatrix}$, the PCI information is represented by 0.

15. The user equipment according to claim 13, wherein the first generating unit is specifically configured to: when the two available precoding matrices are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{1-j}{2} & -\dfrac{1-j}{2} \end{bmatrix}$,

,

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ the PCI information is represented by 0, or if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ the PCI information is represented by 1, or

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ the PCI information is represented by 1, or if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ the PCI information is represented by 0;

when the two available precoding matrices are $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ and $\begin{bmatrix} \dfrac{1}{\sqrt{2}} & \dfrac{1}{\sqrt{2}} \\ \dfrac{-1+j}{2} & \dfrac{1-j}{2} \end{bmatrix}$ if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$ the PCI information is represented by 0, or if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$ the PCI information is represented by 1, or

if the precoding matrix selected by the UE is $\begin{bmatrix} \dfrac{1}{\sqrt{2}} & \dfrac{1}{\sqrt{2}} \\ \dfrac{1+j}{2} & -\dfrac{1+j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{1-j}{2} & -\dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{1-j}{2} & -\dfrac{1-j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0;

when the two available precoding matrices are $\begin{bmatrix} \dfrac{1}{\sqrt{2}} & \dfrac{1}{\sqrt{2}} \\ \dfrac{-1+j}{2} & \dfrac{1-j}{2} \end{bmatrix}$ and $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, if the precoding

matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 0, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 1, or

if the precoding matrix selected by the UE is $\begin{bmatrix} \dfrac{1}{\sqrt{2}} & \dfrac{1}{\sqrt{2}} \\ \dfrac{-1+j}{2} & \dfrac{1-j}{2} \end{bmatrix}$, the PCI information is represented by 1, or if the precoding matrix selected by the UE is $\begin{bmatrix} \dfrac{1}{\sqrt{2}} & \dfrac{1}{\sqrt{2}} \\ \dfrac{-1-j}{2} & \dfrac{1+j}{2} \end{bmatrix}$, the PCI information is represented by 0.

16. The user equipment according to claim 12, wherein when the CQI information is the 8-bit type A CQI information, the encoding unit is specifically configured to concatenate the PCI information and the CQI information to form a 9-bit sequence $a_n$, wherein n = 0,...,8, and calculate an $i^{th}$ joint encoding result $b_i$ in the following manner:

$$b_i = \left( \sum_{n=0}^{8} a_n M_{i,S_n} \right) \bmod 2 ,$$

wherein $M_{i,S_n}$ indicates a basic sequence of HS-DPCCH encoding in a MIMO mode, $S_n \in \{0,1,2,3,4,5,6,7,8,9,10\}$ and = 0,...,8.

17. The user equipment according to claim 12, wherein when the CQI information is the 5-bit type B CQI information, the encoding unit is specifically configured to concatenate the PCI information and the CQI information to form a 6-bit sequence $a_n$, wherein n = 0,...,5, and calculate an $i^{th}$ joint encoding result $c_i$ in the following manner:

$$c_i = \left( \sum_{n=0}^{5} a_n M_{i,T_n} \right) \bmod 2 ,$$

wherein $M_{i,T_n}$ indicates a basic sequence of HS-DPCCH encoding in a MIMO mode, $T_n \in \{0,1,2,3,4,5,6,7,8,9,10\}$, and n = 0,...,5.

User data P-CPICH

FIG. 1

FIG. 2

PCI

Type A CQI or Type B CQI

| Mapping | | Mapping |

$pci_0$   $cqi_0, cqi_1, ..., cqi_7$ | $cqi_0, cqi_1, ..., cqi_4$

Joint encoding

$a_0, a_1, ..., a_8$ or $a_0, a_1, ..., a_5$

FIG. 3

(20,7) (20,6) PCI performance

FIG. 4

FIG. 5

FIG. 6

700

701

Transceiver

702

Processor

FIG. 7

# INTERNATIONAL SEARCH REPORT

| International application No. |
| --- |
| **PCT/CN2013/074693** |

## A. CLASSIFICATION OF SUBJECT MATTER

H04B 7/06 (2006.01) i

According to International Patent Classification (IPC) or to both national classification and IPC

## B. FIELDS SEARCHED

Minimum documentation searched (classification system followed by classification symbols)

IPC: H04L   H04W   H04B

Documentation searched other than minimum documentation to the extent that such documents are included in the fields searched

Electronic data base consulted during the international search (name of data base and, where practicable, search terms used)

CNTXT, CPRSABS, CNKI: precoding control indicator   PCI   channel quality indicator   CQI   matrix   user equipment   UE   base station   information   feedback   bit   multiple input multiple output   MIMO

VEN, NPL, SIPOABS, GOOGLE, IEEE: PCI CQI matrices UE base station information feedback bit MIMO

## C. DOCUMENTS CONSIDERED TO BE RELEVANT

| Category* | Citation of document, with indication, where appropriate, of the relevant passages | Relevant to claim No. |
| --- | --- | --- |
| Y | DAHLMAN, E. et al. "3G Evolution HSPA and LTE for Mobile Broadband" second edition, 31 December 2008 (31.12.2008), pages 257-259 | 1, 11 |
| A | | 2-10, 12-17 |
| Y | CN 101507139 A (QUALCOMM INC.), 12 August 2009 (12.08.2009), description, pages 9-11, and claim 16 | 1, 11 |
| A | WO 2011123747 A1 (INTERDIGITAL PATENT HOLDINGS INC.), 06 October 2011 (06.10.2011), the whole document | 1-17 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 July 2013 (10.07.2013) | **25 July 2013 (25.07.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CHENG, Dong** Telephone No.: (86-10) **62411276** |

Form PCT/ISA/210 (second sheet) (July 2009)

## INTERNATIONAL SEARCH REPORT
### Information on patent family members

| | | International application No. |
|---|---|---|
| | | **PCT/CN2013/074693** |

| Patent Documents referred in the Report | Publication Date | Patent Family | Publication Date |
|---|---|---|---|
| CN 101507139 A | 12.08.2009 | IN 200900397 P4 | 05.06.2009 |
| | | WO 2008022243 A3 | 03.04.2008 |
| | | EP 2052468 A2 | 29.04.2009 |
| | | RU 2419214 C2 | 20.05.2011 |
| | | KR 1073339 B1 | 14.10.2011 |
| | | CA 2658346 A1 | 21.02.2008 |
| | | RU 2009109693 A | 27.09.2010 |
| | | KR 20090043568 A | 06.05.2009 |
| | | US 2008043867 A1 | 21.02.2008 |
| | | JP 2010502114 A | 21.01.2010 |
| | | WO 2008022243 A2 | 21.02.2008 |
| | | TWI 373241 B | 21.09.2012 |
| WO 2011123747 A1 | 06.10.2011 | EP 2553830 A1 | 06.02.2013 |
| | | AU 2011235027 A1 | 25.10.2012 |
| | | KR 20130025898 A | 12.03.2013 |

Form PCT/ISA/210 (patent family annex) (July 2009)

**EP 2 835 914 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210263949